Europäisches Patentamt

European Patent Office

Office européen des brevets

(11) Publication number: **0 156 520**
**B1**

## EUROPEAN PATENT SPECIFICATION

(45) Date of publication of patent specification: **27.12.89**

(51) Int. Cl.⁴: **G 01 N 30/60**

(21) Application number: **85301270.6**

(22) Date of filing: **26.02.85**

(54) Liquid chromatography column apparatus.

(30) Priority: **29.02.84 US 584611**

(43) Date of publication of application:
**02.10.85 Bulletin 85/40**

(45) Publication of the grant of the patent:
**27.12.89 Bulletin 89/52**

(84) Designated Contracting States:
**AT BE CH DE FR GB IT LI LU NL SE**

(56) References cited:
**DE-A-2 945 180**
**US-A-3 855 130**
**US-A-4 131 547**
**US-A-4 187 177**
**US-A-4 389 313**

(73) Proprietor: **Shakelford, Carl L.**
**2666 Brian Road**
**San Pablo California 94806 (US)**
(73) Proprietor: **Rainin, Kenneth**
**26 Sea View,**
**Piedmont, California 94611 (US)**

(72) Inventor: **Shakelford, Carl L.**
**2666 Brian Road**
**San Pablo California 94806 (US)**
Inventor: **Rainin, Kenneth**
**26 Sea View,**
**Piedmont, California 94611 (US)**

(74) Representative: **Barker, Rosemary Anne et al**
**Barlow, Gillett & Percival 94 Market Street**
**Manchester M1 1PJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to liquid chromatography column apparatus.

Known apparatus for use in high pressure liquid chromatography, as disclosed, for example, in U.S. Patent Specifications Nos. 4,187,177 and 4,389,313 comprises a tube filled with material for separating constituents, said tube having a first end portion and a second end portion, first stopper means plugging the first end portion, lying adjacent the material to retain the material within the tube, and having a passage therethrough to the material, an end fitting adjacent to said first stopper means, and second stopper means plugging the second end portion of the tube, lying adjacent the material to retain the material within the tube and also having a passage therethrough to the material.

High pressure liquid chromatography techniques utilize pumps which have a pressure pulsation as a delivery characteristic. This pulsation has a tendency to disturb packaging material in a liquid chromatography column. In particular, a void may develop at the top or head of the column where most of the separation occurs. Also, channels may develop at the interface of the packing material and the column wall. This deterioration is reinforced by chemical attack, high temperatures and other factors. In this regard, the initial packing of a column may also create discontinuities in a portion of the packed material.

Moreover, high pressure liquid chromatography columns encounter other problems in the form of difficulties in sealing a column against leakage. Conventional seals rely on metal to metal contact and metal deformation and may require the use of special tools to tighten the column, and the expensive end fittings needed therewith tend not to be reusable. Sealing mechanisms which may be hand tightened are known, but do not apply pressure to the packing material.

It is an object of the present invention to provide a high pressure liquid chromatography (HPLC) column apparatus in which the aforesaid problems are minimised, specifically wherein pressure can be applied directly to the packing material within the column apparatus to correct any voids or channels which may be present in the column after the initial packing or which may develop after use of the column apparatus, and wherein the end fittings may be hand tightened and loosened without the need for tools and may be reused.

In accordance with the invention, these objects are achieved by provision of a high pressure liquid chromatography column usable with end fittings for enclosing and creating high pressure fluid seals at opposite ends thereof, the column comprising:

a) a tube filled with material for separating constituents, said tube having a first end portion and a second end portion;

b) first stopper means plugging the first end portion lying adjacent the material to retain the material within the tube, and having a passage therethrough to the material; and

c) second stopper means plugging the second end portion of the tube, lying adjacent the material to retain the material within the tube and also having a passage therethrough to the material, characterised in that the first stopper means lies wholly within the first end portion of the tube and, in response to axial force exerted thereon by an end fitting when coupled to the first end portion, is movable axially within said first end portion toward the material to exert an axial compression thereon and eliminate voids therefrom.

In a preferred embodiment of the apparatus of the invention a seal retainer may be provided adjacent the first stopper, between the stopper and the end fitting, and also including a passage therethrough for the transportation of the solution from the exterior of the tube to the packing material. The stopper and the seal retainer may include filters which aid in the purification of the solutions being analysed before contact with the packing material in the tube. Such filters also tend to properly distribute the solution across the head of the packing material.

Whilst end fittings are not essential to the invention, they will be provided when the apparatus is used. In this respect, at the first end of the tube, a portion of the end fitting is located within the tube adjacent the first stopper means, and the end fitting also includes a passage which communicates with the passage of the first stopper means, as well as sealing means for sealing relative to the tube interior.

The column apparatus of the invention may include means for retaining the end fitting in the end of the tube and/or for urging the end fitting against the first stopper means. This means would cause pressure to be exerted against the packing material by the stopper means and would also effect operation of the sealing means to prevent leakage of the solution from the inside of the tube.

A secondary object of the present invention is to provide an HPLC column apparatus which permits the coupling of a pre-column or guard column to a separation column or the coupling of a plurality of separation columns together and to provide for the application of mechanical pressure to the packing materials in both tubular columns.

Thus, in accordance with a development of the invention a second tube may be used in conjunction with the first tube. The second tube is filled with material for separating constituents and has a first end portion coupled to the second end fitting of the first tube which end fitting constitutes coupling means. The coupling means preferably includes a first portion which fits within and is movable within the second end portion of the first tube and a second portion which fits within and is movable within the first end portion of the second tube. The second tube also has first and second stopper means which each have passages therethrough which communicate with material in the second tube. The coupling means also is provided with a passage therethrough which communicates with the first passage of the first stopper means of the first end portion of the second tube and with the second passage of the second stopper means of the second end portion of the first tube. By means of the end fittings and the intervening coupling means the stopper means of the first and second tubes can be squeezed toward one another creating pressure on the packing within the first and second tubes. In this respect, means for urging the coupling element against the stopper means of the second end portion of the first tube may also be provided, which means may be connected to means for urging the first end fitting of the first tube against the first stopper means.

The invention will be described further, by way of example, with reference to the accompanying drawings, in which:

Fig. 1 is a sectional view of broken portions of a first embodiment of the column apparatus of the present invention;

Fig. 2 is a sectional view of broken portions of a second embodiment of the column apparatus of the present invention;

Fig. 3 is a sectional view partially in elevation showing a coupling of two tubes in a modified embodiment of the column apparatus of the invention; and

Fig. 4 is a sectional view partially in elevation showing a single packed tube of a further embodiment of the invention, the packing material of which may be axially compressed.

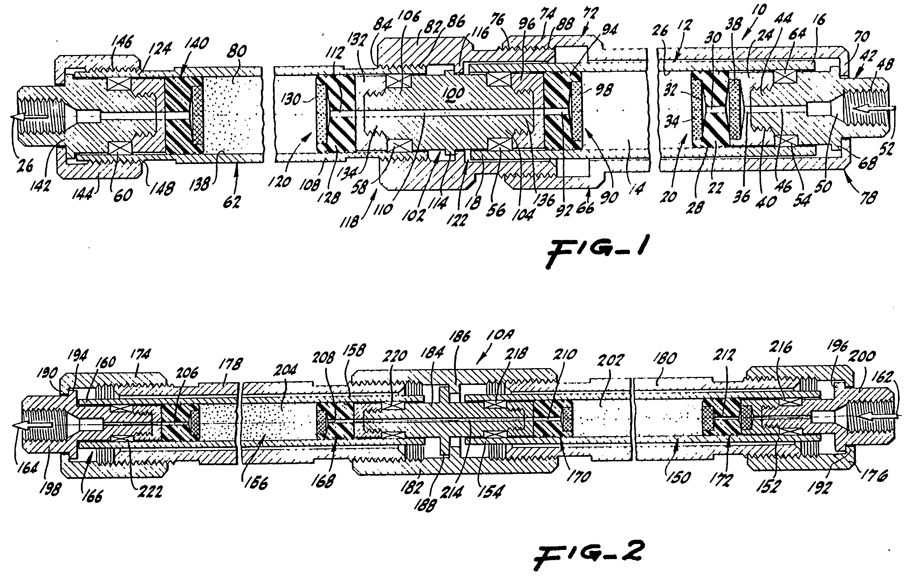

In Figs. 1 and 2 embodiments of the liquid chromatography column apparatus of the invention are indicated as a whole by reference numerals 10 and 10A. The column apparatus 10, Fig. 1, includes as one of its element a tube 12 which is filled with packing material 14 normally used in liquid chromatography separations, for example silica gel or the like. The tube 12 may be constructed of relatively rigid material such as stainless steel, aluminium, or the like. The tube 12 includes a first end portion 16 and a second end portion 18. Means 20 is provided for plugging the first end portion 16 of the tube 12. The plugging means 20 includes a stopper 22 and a seal retainer 24 in side-by-side configuration. The stopper 22 may exert pressure on packing material 14 by direct contact. Both the stopper 22 and the seal retainer 24 are movable along the inside surface 26 of the tube 12.

The stopper 22 may be constructed of a plastics material and include a series of grooves or striations 28 on its outer surface. A passage 30 is provided in the stopper 22 to allow liquid to travel therethrough. The passage 30 flares into an open chamber 32 which contains a filter 34 in the form of a frit which filters and distributes liquid passing therethrough. The seal retainer 24 also has a passage and open chamber combination 36 which holds another frit filter 38 adjacent the seal retainer 24. The frit filter 38 is easily replaceable. The seal retainer 24 may be constructed of metalic material such as stainless steel, aluminium, or the like.

An end fitting 42 includes a threaded protrusion 44 which threadingly engages a threaded hollow 40 of the seal retainer 24. Thus, the seal retainer 24 and the end fitting 42 may be locked together as a unit. The end fitting 42 also includes a passage 46 which leads from a threaded opening 48 and a reducing chamber 50 to the short passage 36 of the seal retainer 24. Thus liquid being analysed by the apparatus 10 would flow according to arrow 52.

Leakage from the inside of the tube 12 is prevented by seals 54 and 56 (shown schematically). An adjoining tube 62, which will be more fully described hereinafter, utilizes further seals 58 and 60, as shown in Fig. 1. The seals 54, 56, 58 and 60 may be of spring loaded Teflon, e.g. Teflon compounded seal manufactured under the name "BAL-SEAL" by the Bal-Seal Engineering Company of Santa Ana, California, Series U-300 for static conditions.

The sealing 54 seals a portion of the inside surface 26 of the tube 12 between the plugging means 20 and the end fitting 42 specifically. In the illustrated example, the seal 54 occupies a torroidal chamber 64 formed by the end fitting 42, the seal retainer 24, and the inside surface 26 of the tube 12.

Fig. 1 also depicts means 66 for retaining the end fitting 42 within the tube 12. Such means 66 in this case takes the form of a collar 70 of coupling means 72 for linking the first tube 12 to the second tube 62, which collar 70 contacts a rim 68 on the end fitting 42. The coupling means 72 in this case takes the form of a generally cylindrical member 74 having a threaded end portion 76 as well as the aforementioned collar 70.

The column apparatus 10 also includes in the embodiment shown in Fig. 1 means 78 for urging the end fitting 42 against the plugging means 20. Such means 78 creates axial compression along the tubes 12 and 62, which in turn compresses the packing material 14 in the tube 12 and packing material 80 in the tube 62. The means 78 consists of the coupling means 72 in combination with an end cap 82 and a threaded end portion 84 of the second tube 62. The internally threaded portion 86 of the end cap 82 threadingly engages the threaded end portion 84 of the tube 62. In addition, the externally threaded portion 88 of the end cap 82 threadingly engages the threaded end portion of cylindrical member 74.

The first tube 12 possesses means 90 for closing the second end portion 18. The means 90 includes a passage 92 therethrough to permit a flow of liquid from the packing material 14. As may be observed from Fig. 1, the means 90 includes a stopper 94 and a seal retainer 96 positioned adjacent to one another and movable along the inside surface of the tube 12. The stopper 94 includes a frit filter 98.

Column apparatus 10 includes coupler means 100 which connects the first tube 12 to the second tube 62 and maintains the axial compression of the packing material 14 and 80 in the tubes 12 and 62 respectively. In the illustrated embodiment, the coupler means 100 consists of an element 102 which has a first portion 104 and a second portion 106. The first portion 104 and the second portion 106 of the element 102 fit within the second end portion 18 of the tube 12 and the first end portion 108 of the second tube 62 respectively. Thus, forces exerted by the means 78 would be received by the element 102. The element 102 also provides a portion of the chambers housing the seals 56 and 58 of the first and second tubes 12 and 62. The element 102 is constructed to include a passage 110 therethrough which communicates with the passage 92 of the closing means 90 and the passage 112 found in the second tube 62 which will be discussed hereinafter. An annular ridge or ring 114 on the element 102 is provided for contact with a corresponding ring 116 on the end cap 82. These contacting rings 114, 116 in conjunction with the threading engagement between the end cap 82 and the threaded end portion 84 of the second tube 62 results in means 118 for urging the coupler element 102 against the first closing means 120 of the first end portion 108 of the second tube 62. In addition the threaded connection between the end cap 82 and the cylindrical member 74 functions as means 122 for retaining the element 102 within the second end portion 18 of the first tube 12 and the first end portion 108 of the second tube 62.

Still with reference to Fig. 1, the second tube 62 is, as mentioned, constructed with a first end portion 108 and a second end portion 124, and the packing material 80 fills the inside of the second tube 62. The first end portion 108 of the second tube 62 includes closing means 120 having passage 112 therethrough which has been previously described. The closing means in this case comprises an external stopper 128 having a frit filter 130 on the packing side thereof. The stopper 128 may be of similar construction to the stopper 22 of the first tube 12. A retainer 132 threadingly engages the threaded boss 134 of the second portion 106 of the element 102. Likewise the threaded boss 136 of the first portion 104 of the element 102 threadingly engages the seal retainer 96 located in the second end portion 18 of the first tube 12. The stopper 128 and the seal retainer 132 are movable along the inside surface 138 of the second tube 62. The second end portion 124 of the second tube 62 also includes closing means 140 which will not be described in detail since it is essentially identical to first closing means 118 of the first portion 108 of the second tube 62, with its components being in reverse order. An end fitting 142, and the second closing means 140 are held within the second tube 62 by an end cap 144. A threaded portion 146 of the end cap 144 threadingly engages the threaded end portion 148 of the second tube 62 to achieve this. The tube 62 may also be fitted within components similar to the end fitting 142 and the end cap 144 at its first end portion 108. Thus, a column could be formed having axial compression exerted by tightening of the end cap 144 and another end cap similar to the end cap 144 at the second end portion 124 and the first end portion 108 of the second tube 62. Such compression would tend to compress the packing material 80 in the middle portion of the second tube 62.

In Fig. 2, another embodiment 10A of the column apparatus of the invention is depicted. The column apparatus 10A includes a first tube 150 having a first end portion 152 and a second end portion 154. A second tube 156 is also provided having a first end portion 158 and a second end portion 160. Liquid is intended to flow through column apparatus 10A starting at inlet arrow 162 and exiting at outlet arrow 164. Returning to fig. 1 and with reference to the second closing means 140 of the second end portion 124 of the second tube 62, it will be seen that a similar closing means 166 is used on the second end portion 160 of the second tube 156 in Fig. 2. Similarly, the first closing means 118 of the first end portion 108 of the tube 62 in Fig. 1 is similar to closing means 168 for the first portion 158 of the second tube 156 in Fig. 2. The closing means 90, the plugging means 20, and the end fitting 42 of the first tube 12 are also comparable to the closing means 170 and 172 of the first tube 150 in Fig. 2. It will be observed however, that tubes 150 and 156 are of a smaller diameter than the tubes 12 and 62 of Fig. 1. Also, neither of the tubes 150 and 156 include threaded external portions. End caps 174 and 176 merely threadingly engage bushings 178 and 180 and a further bush 182 threadingly engages bushings 178 and 180. A coupling element 184 extends into the tubes 150 and 156 and threadingly engages the closing means 168 and 170. An internal flange 186 of the bush 182 contacts a ring or collar 188 of the coupling element 184 to urge the same toward the second tube 156. The end caps 174 and 176 also include collars 190 and 192 which engage flanges 194 and 196 of respective end fittings 198 and 200. Since closing means 166, 168, 170 and 172 are movable along the inside of the tubes 150 and 156, the tightening of the end caps 174, 176, or the bush 182 will cause axial compression along the tubes 150 and 156 which are in end configuration. Such compression will also exert a force on the packing material 202 and 204 of the tubes 150 and 156. Passages 206, 208 and 210 and 212 of closing means 166, 168, 170 and 172 permit the flow of fluid being analysed to the packing material 202 and 204. In addition, passage 214 of the coupling element 184 links the flow of liquid between the first tube 150 and the second tube 156.

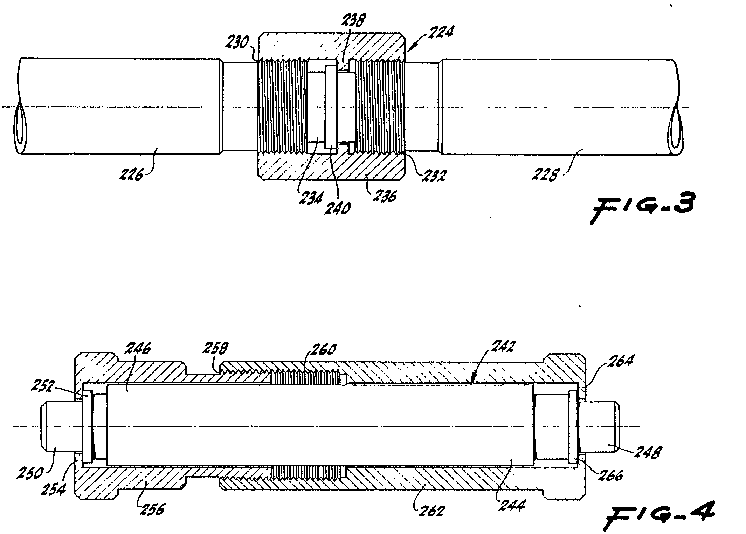

In Fig. 3 coupling means 224 is illustrated connecting two tubes 226 and 228. The tubes 226 and 228 include threaded end portions 230 and 232 similar to the threaded end portion 84 of the tube 62 in Fig. 1. A coupler element 234 extends to the interior of the tubes 226 and 228 much in the same manner as the coupler element 100 extends into the tubes 12 and 62 in Fig. 1. A bush 236 possesses an internal ring or collar 238 which engages a flange or ring 240 around the coupler element 234. The tubes 226 and 228 may include closing means, similar to the closing means 120 at the first end portion 108 of the tube 62, in abutment with either end of the coupler element 234. A similar closing means may also be provided at the other ends of the tubes 226 and 228 (not shown).

In Fig. 4 a single tube 242 is depicted having unthreaded end portions 244 and 246. End fittings 248 and 250 partially fit within the end portions 244 and 246 and are similar in construction to the end fitting 42 associated with the tube 12 in Fig. 1. Also, closing means such as closing means 172 of the first end portion 152 of the tube 150 in Fig. 2, may be found within the tube 242 at the first and second end portions 244 and 246. The tube 242 would also be filled with packing material such as packing material 202 which is found within the tube 150 in Fig. 2. A rim 252 of the end fitting 250 is engaged by a flange 254 on the end cap 256. The end cap 256 also includes a threaded portion 258 which is threadingly engaged by a threaded end portion 260 of another end cap 262. A flange 264 of the end cap 262 engages a rim 266 of the other end fitting 248. Thus, the tightening of the end caps 256 and 262 will cause the end fittings 248 and 250 actually to compress the packing material (not shown) within the tube 242.

In operation, a user connects the tube 12 to the tube 62 (Fig. 1) by means of the coupling means 100. The closing means at both ends of each tube 12, 62 are inserted and the end cap 144 and cylindrical member 74 are tightened against the end fittings 142 and 42 respectively to compress the items located within the tubes 12 and 62. Liquid is directed into the column apparatus 10 according to directional arrow 52 and exits from the same according to directional arrow 126. Separation of the components of the test substance takes place within the packing material 14 and 80 in the tubes 12 and 62.

Similarly, the column apparatus 10A (Fig. 2) is assembled and tightened using the end caps 174 and 176 and the bush 182. Liquid is then directed into column apparatus 10A according to directional arrow 162 and exits at directional arrow 164. Again, separation takes place in the packing material 202 and 204 in the tubes 150 and 156.

The exertion of axial compression in either the embodiment 10 showing in Fig. 1 or the embodiment 10A in Fig. 2 will also effect the sealing of the tubes. For example, the tubes 12 and 62 would be sealed against leakage from within at the seals 54 and 56, and at the seals 58 and 60 respectively. The column apparatus 10A would be sealed at seals 216, 218, 220 and 222 (shown schematically). Seals employed in the column apparatus 10A would be similar to those employed in the column apparatus 10. The tightening hereinabove described may be effected without the use of tools; in other words the apparatus 10 or 10A may be hand tightened. It has been found that fluids under a pressure in excess of six thousand pounds per square inch (422 kg per square centimeter) will flow through the apparatus of the present invention without leakage therefrom.

It is also possible to link other columns or tubes to the two-tube embodiments shown in Figs. 1 and 2. For example, Fig. 3 shows the linking together of two tubes 226 and 228. By merely substituting the tube 62 for the tube 228 three tubes may be linked together in series, namely tubes 12, 62 and 226. This may be desirable in certain liquid chromatography separation processes.

With reference to Fig. 4 it will be appreciated that a single tube, which may be a pre-column or guard column, also enjoys axial compression of the packing material therewithin. Such axial compression is effected by simply tightening the end caps 256 and 262. It should be noted that the sealing described in detail with reference to Figs. 1 and 2 also takes place in the embodiments shown in Figs. 3 and 4.

While in the foregoing embodiments of the present invention have been set forth in considerable detail for the purposes of making a complete disclosure of the invention, it will be apparent to those of skill in the art that numerous changes may be made in such detail without departing from the scope of the invention as defined in the following claims.

## Claims

1. A high pressure liquid chromatography column usable with end fittings (42; 200) for enclosing and creating high pressure fluid seals at opposite ends thereof, the column comprising:

a) a tube (12; 150) filled with material (14; 202) for separating constituents, said tube having a first end portion (16; 152), and a second end portion (18; 154);

b) first stopper means (22; 172) plugging the first end portion (16; 152), lying adjacent the material (14; 202) to retain the material within the tube, and having a passage (30; 212) therethrough to the material; and

c) second stopper means (94; 170) plugging the second end portion (18; 154) of the tube, lying adjacent the material to retain the material within the tube and also having a passage (92; 210) therethrough to the material,

characterised in that the first stopper means (22; 172) lies wholly within the first end portion (16; 152) of the tube and, in response to axial force exerted thereon by an end fitting (42; 200) when coupled to the first end portion, is movable axially within said first end portion toward the material to exert an axial compression thereon and eliminate voids therefrom.

2. A column according to claim 1 in combination with a first axially movable end fitting (42; 200) enclosing the first end portion of the tube, characterised in that the end fitting (42; 200) has a passage (46, 50) therethrough which communicates with the passage (30; 212) of the first stopper means (22; 172), in that at least a portion of the end fitting is located within the first end portion (16; 152) of the tube adjacent the first stopper means, and in that sealing means (54; 216) are provided between said portion of the end fitting and the inside surface of the tube.

3. A column according to claim 2 which additionally includes means (66, 68, 78; 176, 196) for retaining the end fitting (42; 200) within the tube and for urging the end fitting toward the first stopper means (22; 172) thereby to exert axial pressure thereon.

4. A column according to claim 2 or 3 including a seal retainer (24) connecting the end fitting (42) to the stopper (22), said seal retainer being movable along the tube (12) and including a passage (36) therethrough which communicates with the passage (46, 50) through the end fitting and the passage (30) through the stopper.

5. A column according to any preceding claim wherein a first filter (34) is supported by the first stopper means (22).

6. A column according to any preceding claim wherein a second filter (98) is supported by the second stopper means (94).

7. A column according to any preceding claim and including a second end fitting (100; 184; 234; 250) adjacent to said second stopper means (94; 170), characterised in that said second stopper means lies wholly within the second end portion (18; 154) of the tube and, in response to axial force exerted thereon by the adjacent end fitting, is movable axially within said second end portion toward the material to exert an axial compression thereon and eliminate voids therefrom.

8. A column according to claim 7, characterised in that the second end fitting has a passage (110, 214) therethrough which communicates with the passage (92; 210) of the second stopper means (94; 170), in that at least a portion of the second end fitting is located within the second end portion (18; 154) of the tube adjacent the second stopper means, and in that sealing means (56; 218) are provided between said portion of the second end fitting and the inside surface of the tube.

9. A column according to claim 7 or 8 and further including:

a second tube (62; 156) filled with material (80; 204) for separating constituents, said second tube having a first end portion (108; 158) coupled to the second end fitting (100; 184) of the first tube (12; 150), which constitutes coupling means, and a second end portion (124, 160);

third stopper means (128; 168) located wholly within the first end portion of the second tube, separate from the second end fitting, lying against the material to retain the material within the second tube, and having a passage (112; 208) therethrough to the material (80; 204), said third stopper means, in response to axial pressure exerted thereon by the coupling means, being movable axially within the first end portion of the second tube towards said material to exert an axial force thereon and to eliminate voids therefrom;

fourth stopper means (140) in the second end portion of the second tube lying adjacent the material for retaining the material within the second tube and having a passage (206) therethrough to said material; and

a third end fitting (142; 198) on the second end portion of the second tube adjacent the fourth stopper means (140).

10. A column according to claim 9 wherein the fourth stopper means (140) lies wholly within the second end portion (124; 168) of the second tube (62; 156) and, in response to axial force exerted thereon by the third end fitting (142; 198) is movable axially within said second end portion toward the material to exert an axial compression thereon and eliminate voids therefrom.

11. A column according to claim 9 or 10 further including threaded sleeve means (82, 116; 182, 186) for urging the second end fitting (100; 184) towards the third stopper (128; 168) in the first end portion of the second tube.

12. A column according to any of claims 9, 10 or 11 further including end cap means (78; 176) for urging the first stopper (22; 172) in the first end portion of the first tube towards the second end portion of the first tube.

13. A column according to claim 11 and 12 including additional threaded sleeve means (180) for connecting the second end fitting (184) to the cap means (176).

## Patentansprüche

1. Hochdruck-Flüssigchromatographiekolonne, mit Endpaßstücken (42; 200) zum Verschließen und zur Bildung von Hochdruckflüssigkeitsdichtungen an ihren gegenüberliegenden Enden einsetzbar, bestehend aus:

a) einem Rohr (12; 150), das mit Material (14; 202) zur Trennung von Bestandteilen gefüllt ist, wobei das besagte Rohr einen ersten Endabschnitt (16; 152) und einen zweiten Endabschnitt (18; 154) aufweist,

b) einem ersten Pfropfen (22; 172), der den ersten Endabschnitt (16; 152) verschließt und in Anlage an das Material (14; 202) angeordnet ist, um das Material im Rohr festzuhalten, und der einen Durchlaß (30; 212) zum Material aufweist und

c) einen zweiten Pfropfen (94; 170), der den zweiten Endabschnitt (18; 154) des Rohres verschließt und in Anlage an das Material angeordnet ist, um das Material im Rohr festzuhalten, und der ebenfalls einen Durchlaß (92; 210) zum Material aufweist,

dadurch gekennzeichnet, daß der erste Pfropfen (22; 172) vollständig innerhalb des ersten Endabschnitts (16; 152) des Rohres liegt und, infolge einer von einem Endpaßstück (42; 200) bei seinem Anbringen am ersten Endabschnitt auf ihn ausgeübten axialen Kraft, innerhalb des besagten ersten Endabschnitts axial auf das Material zubewegbar ist, um auf dieses eine axiale Kompression auszuüben und in ohm enthaltene Blasen zu beseitigen.

2. Kolonne nach Anspruch 1 in Verbindung mit einem ersten, axial beweglichen · Endpaßstück (42; 200), das den ersten Endabschnitt des Rohres abschließt, dadurch gekennzeichnet, daß das Endpaßstück (42; 200) einen Durchlaß (46, 50) aufweist, der mit dem Durchlaß (30; 212) des ersten Pfropfens (22; 172) in Verbindung steht, daß mindestens ein Teil des Endpaßstückes innerhalb des ersten Endabschnittes (16; 152) des Rohres in Anlage an den ersten Pfropfen angebracht ist, und daß Dichtungen (54; 216) zwischen besagtem Teil des Endpaßstückes und der inneren Oberfläche des Rohres angebracht sind.

3. Kolonne nach Anspruch 2, die zusätzlich Einrichtungen (66, 68, 78; 176, 196) aufweist, die das Endpaßstück (42; 200) im Rohr festhalten und das Endpaßstück gegen den ersten Pfropfen pressen, um dadurch einen axialen Druck auf diesen auszuüben.

4. Kolonne nach Anspruch 2 oder 3, bestehend aus einem Dichtungshalteelement (24), das das Endpaßstück (42) mit dem Pfropfen (22) verbindet, wobei das besagte Dichtungshalteelement entlang des Rohres (12) bewegbar ist und einen Durchlaß (36) aufweist, der mit dem Durchlaß (46, 50) des Endpaßstückes und mit dem Durchlaß (30) des Pfropfens in Verbindung steht.

5. Kolonne nach einem der Ansprüche 1 bis 4, in der ein erstes Filter (34) vom ersten Pfropfen (22) gehalten wird.

6. Kolonne nach einem der Ansprüche 1 bis 5, in der ein zweites Filter (98) vom zweiten Pfropfen (94) gehalten wird.

7. Kolonne nach einem der Ansprüche 1 bis 6, mit einem zweiten, an besagtem zweiten Pfropfen (94; 170) anliegenden Endpaßstück (100; 184; 234; 250), dadurch gekennzeichnet, daß besagter zweiter Pfropfen vollständig innerhalb des zweiten Endabschnittes (18; 154) des Rohres liegt und, infolge einer vom benachbarten Endpaßstück auf ihn ausgeübten axialen Kraft, innerhalb des besagten zweiten Endabschnittes axial auf das Material zubewegbar ist, um auf dieses eine axiale Kompression auszuüben und in ihm enthaltene Blasen zu entfernen.

8. Kolonne nach Anspruch 7, dadurch gekennzeichnet, daß das zweite Endpaßstück einen Durchlaß (110, 214) aufweist, der mit dem Durchlaß (92; 210) des zweiten Pfropfens (94; 170) in Verbindung steht, daß mindestens ein Teil des zweiten Endpaßstückes innerhalb des zweiten Endabschnittes (18; 154) des Rohres in Anlage an den zweiten Pfropfen angeordnet ist und daß Dichtungen (56; 218) zwischen besagtem Teil des zweiten Endpaßstückes und der inneren Oberfläche des Rohres angebracht sind.

9. Kolonne nach Anspruch 7 oder 8, außerdem bestehend aus einem zweiten Rohr (62; 156), das zur Trennung von Bestandteilen mit Material (80; 204) gefüllt ist, wobei das besagte zweite Rohr einen ersten, mit dem zweiten, eine Kopplung bildenden Endpaßstück (100; 184) des ersten Rohres (12; 150), verbundenen Endabschnitt (108; 158) und einen zweiten Endabschnitt (124; 160) aufweist;

einem dritten Pfropfen (128; 168), der vollständig innerhalb des ersten Endabschnittes des zweiten Rohres angeordnet ist, getrennt vom zweiten Endpaßstück und in Anlage an das Material, um das Material im zweiten Rohr festzuhalten, und der einen Durchlaß (112; 208) zum Material (80; 204) aufweist, wobei besagter dritter Pfropfen, infolge eines von der Kopplung auf ihn ausgeübten axialen Druckes, axial innerhalb des ersten Endabschnittes des zweiten Rohres auf besagtes Material zubewegbar ist, um auf dieses eine axiale Kraft auszuüben und in ihm enthaltene Blasen zu entfernen;

einem vierten Pfropfen (140) im zweiten Endabschnitt des zweiten Rohres, der am Material anliegt, um das Material im zweiten Rohr festzuhalten, und der einen Durchlaß (206) zu besagtem Material aufweist; und

einem dritten Endpaßstück (142; 198) am zweiten Endabschnitt des zweiten Rohres, das am vierten Pfropfen (140) anliegt.

10. Kolonne nach Anspruch 9, wobei der vierte Pfropfen (140) vollständig innerhalb des zweiten Endabschnittes (124; 168) des zweiten Rohres (62; 156) liegt und der, infolge einer vom dritten Endpaßstück (142; 198) auf ihn ausgeübten axialen Kraft, innerhalb des besagten zweiten Endabschnittes auf das Material zubewegbar ist, um auf dieses eine axiale Kompression auszuüben und in ihm enthaltene Blasen zu entfernen.

11. Kolonne nach Anspruch 9 oder 10, die außerdem mit Gewinde versehene Hülsen (82, 116; 182, 186) aufweist, um das zweite Endpaßstück (100; 184) gegen den dritten Pfropfen (128; 168) im ersten Endabschnitt des zweiten Rohres zu drücken.

12. Kolonne nach einem der Ansprüche 9 bis 11, die außerdem Endkappen (78; 176) aufweist, um den ersten Pfropfen (22; 172) im ersten Endabschnitt des ersten Rohres gegen den zweiten Endabschnitt des ersten Rohres zu drücken.

13. Kolonne nach Anspruch 11 oder 12, die zusätzliche, mit Gewinde versehene Hülsen (180) zur Verbindung des zweiten Endpaßstückes (184) mit der Kappe (176) aufweist.

## Revendications

1. Une colonne de chromatographie liquide sous haute pression utilisable avec des raccords d'extrémités (42; 200) destinés à enfermer les extrémités opposées de celle-ci et à créer à ces extrémités des joints pour fluides sous haute pression, la colonne comprenant:

a) un tube (12; 150) rempli de matière (14; 202) destiné à séparer les constituants, ledit tube possédant une première partie d'extrémité (16; 152) et une deuxième partie d'extrémité (18; 154);

b) un premier moyen de bouchon (22; 172) bouchant la première partie d'extrémité (16; 152), situé adjacent à la matière (14; 202) pour retenir la matière à l'intérieur du tube et comportant un passage traversant (30; 212) vers la matière; et

c) un deuxième moyen de bouchon (94; 170) bouchant la deuxième partie d'extrémité (18; 154) du tube, situé adjacent à la matière pour retenir la matière à l'intérieur du tube et présentant également un passage traversant (92; 210) vers la matière,

caractérisée en ce que le premier moyen de bouchon (22; 172) est entièrement situé à l'intérieur de la première partie d'extrémité (16; 152) du tube et, en réponse à une force axiale qui y est exercée par un raccord d'extrémité (42; 200) lorsqu'il est couplé à la première partie d'extrémité, est mobile axialement à l'intérieur de ladite première partie d'extrémité vers la matière pour exercer sur celle-ci une compression axiale et en éliminer des vides.

2. Une colonne selon la revendication 1 en combinaison avec un premier raccord d'extrémité mobile axialement (42; 200) fermant ladite première partie d'extrémité du tube, caractérisée en ce que le raccord d'extrémité (42; 200) comporte un passage traversant (46, 50) qui communique avec le passage (30; 212) du premier moyen de bouchon (22; 172), en ce qu'au moins une partie de raccord d'extrémité est située à l'intérieur de la première partie d'extrémité (16; 152) du tube adjacente au premier moyen de bouchon, et en ce que les moyens formant joints (54; 216) sont disposés entre ladite partie du raccord d'extrémité et la surface intérieure du tube.

3. Une colonne selon la revendication 2 qui comprend de plus des moyens (66, 68, 78; 176, 196) pour retenir le raccord d'extrémité (42; 200) à l'intérieur du tube et pour solliciter le raccord d'extrémité vers le premier moyen de bouchon (22; 172) pour exercer ainsi une pression axiale sur celui-ci.

4. Une colonne selon la revendication 2 ou 3 comprenant un dispositif (24) de maintien de joint reliant le raccord d'extrémité (42) au moyen de bouchon (22), ledit moyen de maintien de joint étant mobile le long du tube (12) et comprenant un passage traversant (36) qui communique avec le passage (46, 50) à travers le raccord d'extrémité et le passage traversant (30) du bouchon.

5. Une colonne selon l'une quelconque des précédentes revendications dans laquelle un premier filtre (34) est supporté par le premier moyen de bouchon (22).

6. Une colonne selon l'une quelconque des précédentes revendications dans laquelle un deuxième filtre (98) est supporté par le deuxième moyen de bouchon (94).

7. Une colonne selon l'une quelconque des précédentes revendications et comprenant un deuxième raccord d'extrémité (100; 184; 234; 250) adjacent audit deuxième moyen de bouchon (94; 170), caractérisée en ce que ledit deuxième moyen de bouchon est situé entièrement à l'intérieur de la deuxième partie d'extrémité (18; 154) du tube et, en réponse à une force axiale qui y est exercée par le raccord d'extrémité adjacent, est mobile axialement à l'intérieur de la deuxième partie d'extrémité vers la matière pour exercer une compression axiale sur celle-ci et en éliminer des vides.

8. Une colonne selon la revendication 7, caractérisée en ce que le deuxième raccord d'extrémité comporte un passage traversant (110, 214) qui communique avec le passage (92; 210) du deuxième moyen de bouchon (94; 170), en ce qu'au moins une partie du deuxième raccord d'extrémité est située à l'intérieur de la deuxième partie d'extrémité (18; 154) du tube adjacente au deuxième moyen de bouchon, et en ce que des moyens formant joints (56; 218) sont disposés entre ladite partie du deuxième raccord d'extrémité et la surface intérieure du tube.

9. Une colonne selon la revendication 7 ou 8 et comprenant en outre:

un deuxième tube (62; 156) rempli de matière (80; 204) pour séparer les constituants, ledit deuxième tube comportant une première partie d'extrémité (108; 158) couplée au deuxième raccord d'extrémité (100, 184) du premier tube (12; 150), qui constitue des moyens de couplage, et une deuxième partie d'extrémité (124; 160);

un troisième moyen de bouchon (128; 168) situé entièrement à l'intérieur de la première partie d'extrémité du deuxième tube, séparé du deuxième raccord d'extrémité, reposant contre la matière pour maintenir la matière à l'intérieur du deuxième tube, et comportant un passage traversant (112; 208) vers la matière (80; 204), ledit troisième moyen de bouchon, en réponse à une pression axiale qui y est exercée par les moyens de couplage, étant mobile axialement à l'intérieur de la première partie d'extrémité du deuxième tube vers ladite matière pour y exercer une force axiale et pour y en éliminer des vides;

un quatrième moyen de bouchon (140) dans la deuxième partie d'extrémité du deuxième tube située adjacente à la matière pour maintenir la matière à l'intérieur du deuxième tube et comportant un passage traversant (206) vers ladite matière; et un troisième raccord d'extrémité (142; 198) sur la deuxième partie d'extrémité du deuxième tube adjacente au quatrième moyen de bouchon (140).

10. Une colonne selon la revendication 9 dans laquelle le quatrième moyen de bouchon (140) est situé entièrement à l'intérieur de la seconde partie d'extrémité (124; 168) du deuxième tube (62; 156) et, en réponse à une force axiale qui y est exercée par le troisième raccord d'extrémité (142; 198) est mobile axialement à l'intérieur de ladite deuxième partie d'extrémité vers la matière pour y exercer une compression axiale et en éliminer les vides.

11. Une colonne selon la revendication 9 ou 10 comprenant de plus des moyens de manchons filetés (82, 116; 182, 186) pour solliciter le deuxième raccord d'extrémité (100, 184) vers le troisième moyen de bouchon (128; 168) dans la première partie d'extrémité du deuxième tube.

12. Une colonne selon l'une quelconque des revendications 9, 10 ou 11 comprenant de plus des moyens formant capuchon d'extrémité (78; 176) pour solliciter le deuxième moyen de bouchon (22; 172) dans la première partie d'extrémité du premier tube vers la deuxième partie d'extrémité du premier tube.

13. Une colonne selon la revendication 11 et 12 comprenant des moyens additionnels (180) de manchons filetés pour relier le deuxième raccord d'extrémité (184) au moyen formant capuchon (176).

FIG-1

FIG-2

1

FIG-3

FIG-4